# EUROPÄISCHE PATENTANMELDUNG

(11) **EP 1 371 464 A2**
(43) Veröffentlichungstag der Anmeldung: **17.12.2003**
(21) Anmeldenummer: 02025595.6
(22) Anmeldetag: 18.11.2002
(51) Int. Cl.: B27K 3/50

(54) **Detektierbares Mittel zur Holzbehandlung und Verfahren zu dessen Nachweis**

(30) Priorität: 13.06.2002 DE 20209157 U
(71) Anmelder: Nutrinova Nutrition Specialties & Food Ingredients GmbH, 65929 Frankfurt am Main (DE)
(72) Erfinder: Raczek, Nico N., Dr, 65779 Kerkheim (DE); Wetzel, Ariane, 65929 Frankfurt (DE)
(74) Vertreter: Schweitzer, Klaus, Dr.

(57) **Zusammenfassung**

Vorliegende Erfindung betrifft eine Zusammensetzung enthaltend eine organische Konservierungsstoffsäure und eine UV-aktive Indikatorsubstanz zur Konservierung und zum Nachweis der ausreichenden Konservierung von Holz.

## Beschreibung

Die vorliegende Erfindung betrifft ein detektierbares Mittel zur Holzbehandlung sowie ein Verfahren, mit dem die Anwesenheit des Mittels im Holz nachgewiesen werden kann.

Holz als Material natürlichen Ursprungs unterliegt wie alle organischen Materialien einem mikrobiologisch bedingten Verderb. Neben Basidiomyceten (Ständerpilzen) tragen auch Schimmelpilze, Hefen und in seltenen Fällen auch Bakterien zu diesem Verderb bei. Besonders in feuchter Umgebung ist Holz anfällig gegen die genannten Verderber.

Zu den Verderbern gehören auch verschiedene holzverfärbende Pilze, die relativ schnell auf frisch angeschnittenen und/oder der Witterung ausgesetzten Holzflächen wachsen können. Dies trifft auch auf Holz zu, welches unter ungünstigen Bedingungen, beispielsweise im Wald nach dem Einschlag oder unter Planen nach der Verarbeitung, insbesondere während des Transportes, gelagert werden muss. Die Verfärbungen, die z. B. von Aureobasidium pullulans verursacht werden können, sind bei nicht behandeltem Holz häufig. Sie sind unter der Bezeichnung "Bläue" bekannt. Das Vorhandensein solcher Pilze kann nicht nur zur Beeinträchtigung des Aussehens von Holz bzw. daraus hergestellter Gegenstände führen, es besteht darüber hinaus das Risiko, dass Pilze oder von diesen gebildete Toxine vom Holz auf andere Produkte übergehen und dass sogar Dauerformen der Schimmelpilze in die Umgebungsluft abgegeben werden. Das Einatmen solcher Pilze kann bei sensibilisierten Personen beispielsweise zu Asthmaanfällen führen. Weiterhin wird das Holz aber auch in seinem Wert nachhaltig geschädigt, so dass befallenes Holz nur noch geringen Wert hat oder vernichtet werden muss.

Allein schon aus Gründen des Produktschutzes und aus Verbraucherschutzgründen ist eine Schutzbehandlung nahezu unabdingbar.

In der Holzindustrie kommen verschiedene Holzschutzmittel zur Anwendung. Häufig sind die Inhaltsstoffe dieser Holzschutzmittel Substanzen, die mit einem erheblichen Gesundheitsrisiko verbunden sind. Z. B.: Fluorverbindungen (wie Kupferhexafluorsilikat, Kaliumhydrogenfluorid, Ammoniumhydrogenfluorid), Arsenverbindungen (hauptsächlich Arsenpentoxid), Borverbindungen (wie Borsäure, Polybor), Kupferverbindungen (z. B. Kupfersulfat), Zinnverbindungen u. a.. Die ebenfalls verwendeten Chromverbindungen (wie Kaliumchromat, Ammoniumdichromat) sind keine Biozide im eigentlichen Sinne mehr, da diese der Fixierung der Biozide im Holz dienen.

Die meisten dieser Stoffe gelten nach der Gefahrstoffverordnung als giftig oder zumindest gesundheitsschädlich. Neben den noch als harmlos einzustufenden geruchlichen Belästigungen durch geruchsintensive Holzschutzmittel wie Holzteeröle kann es allein schon durch Kontakt mit einigen der o.g. Holzschutzmittel oder entsprechend behandeltem Holz zu erheblichen gesundheitlichen Beeinträchtigungen kommen.

Trotz der notwendigen Arbeitschutzmaßnahmen bei der Anwendung solcher Holzbehandlungsmittel im industriellen Bereich ist der Verwender eines so behandelten Holzes häufig nicht über die möglichen gesundheitlichen Risiken des direkten Kontakts mit dem so behandelten Holz informiert. Bei dauerndem direktem Kontakt mit diesem Holz ist das Risiko gesundheitlicher Spätschäden nicht auszuschließen.

Neben der Anwendung solcher Stoffe im industriellen Bereich ist daher die handwerkliche Anwendung im Haus- und Heimbereich besonders problematisch.

Besonders strenge Maßstäbe sind für Holz anzulegen, welches in Berührung mit Lebensmitteln, Lebensmittelzutaten, Bedarfsgegenständen, Futtermitteln, Haustierfutter, kosmetischen Mitteln, Lebensmittelabfällen oder Gegenständen des täglichen Bedarfs im weitesten Sinne kommen kann. Hierbei besteht immer die Möglichkeit eines direkten Überganges auf diese Gegenstände wie z. B. Lebensmittel. Ein solcher Übergang muss bei nicht zum Verzehr geeigneten oder sogar toxischen Stoffen unbedingt vermieden werden, um gesundheitliche Risiken auszuschließen. Weil aber eine unbeabsichtigte oder indirekte Kontamination erfahrungsgemäß nicht absolut ausgeschlossen werden kann, besteht die Aufgabe, einen ausreichenden Schutz des Holzes vor Schimmelbefall zu erreichen, ohne dass bei Kontakt mit dem Holz oder einem Übergang des Holzschutzmittels auf andere Produkte wie Lebensmittel gesundheitliche Risiken entstehen.

Konservierungsstoffe, die zur Haltbarmachung von verschiedenen Lebensmitteln eingesetzt werden, wurden gelegentlich auch auf ihre Anwendbarkeit zur Konservierung von Holz überprüft, insbesondere in Form von Derivaten, die als solche nicht zur Lebensmittelkonservierung verwendet werden. Einige Erfindungen nehmen sich dieser Problematik an und setzen verschiedene Säuren, teilweise in Kombination mit anderen Stoffen zur Behandlung von Holz ein. So werden in der DE-A 100 03 170 (= EP-A 1 123 787) Sorbinsäure und ihre Salze zum Schutz von Holz vor Schimmelpilzbefall eingesetzt. Die DE-A 197 03 552 beschreibt schimmelpilzhemmende, wässrige Zubereitungen für die Innenraumanwendungen; hier werden auch Sorbinsäure und deren Salze eingesetzt. US-A 4 585 795 offenbart die Anwendung von Mischungen aus Alkalimetallsalzen organischer Säuren, in Kombination mit ausgewählten quaternären Ammoniumsalzen zum Schutz gegen Schimmelpilzbefall auf Holz. JP-A 100 67 607 beschreibt ein Holzinsektizid, welches als Wirkstoff mindestens eine C₆-C₁₂-Fettsäure in Mengen zwischen 0,01 und 9 Gew.- % enthält. In der WO-A 96/11572 werden Zusammensetzungen aus Carbonsäuren mit bis zu 10 C-Atomen und deren Salze und C₃-C₁₀-Diolen oder der Ester dieser Verbindungen zur Reinigung, Desinfektion, Oberflächenbehandlung, Imprägnierung oder zur antimikrobiellen Behandlung beschrieben.

Wird Holz beispielsweise mit Lösungen o.g. Substanzen behandelt, ist nach dem Auftrocknen der Lösung die vorherige Behandlung in den meisten Fällen nicht mehr einfach nachweisbar. Sie ist aber für eine Qualitätsbeurteilung, für die Weiterverarbeitung und den Handel von entscheidender wirtschaftlicher Bedeutung. Eine Behandlung ist zwar durch die Untersuchung eines einzelnen Produktes möglich, zieht aber eine aufwendige chemische Analyse und Bearbeitung nach sich. Dazu müssen die entsprechenden Schutzmittel aufwändig aus dem Holz isoliert (beispielweise durch Extraktion mit organischen Lösemitteln), konzentriert, identifiziert und quantifiziert werden. Die erhaltenen Ergebnisse können aber nur auf das untersuchte Produkt bezogen werden. Große Mengen an bearbeitetem Holz oder Holz in zusammengesetzten Produkten (wie beispielsweise Paletten) im industriellen oder im handwerklichen (wie unbearbeitetes Möbelholz) oder Heimwerker-Bereich lassen sich weiterhin nicht als ganzes untersuchen. Außerdem ist es bei der Anwendung o.g. Verfahren in holzverarbeitenden Betrieben aufgrund der hohen Durchsatzmengen häufig nicht möglich zu prüfen, ob das bearbeitete Holz an allen Stellen ausreichend behandelt wurde, ganz abgesehen davon, dass Vorrichtungen zur Durchführung solcher Prüfungen teuer sind und die Prüfungen selber meist nur von qualifizierten Fachkräften durchgeführt werden können. Ein solcher Aufwand rechtfertigt sich in den meisten Fällen nicht.

Es wurde bereits vorgeschlagen, den zur Holzbehandlung eingesetzten Lösungen organischer Säuren oder deren Salzen einen Indikator hinzuzufügen. Solche Indikatoren sind beispielsweise in der DE-A 196 11 868 als Markierungsmittel für Holz vorbeschrieben. Dazu bedient man sich aber immer chemischer Reaktionen (in der DE-A 196 11 868 werden dabei farbintensive Azofarbstoffe gebildet). Sowohl die eingesetzten Substanzen als auch die zur Kopplung notwendigen Chemikalien sind i.a. toxikologisch bedenklich. Weiterhin können mit diesem Verfahren wieder nur punktuelle Untersuchungen vorgenommen werden und führen zu Verfärbungen an den Untersuchungsstellen.

In der WO-A 02/17717 wird ein fluoreszentes Mittel beschrieben, welches indiziert, ob ein zur Verwendung vorgesehenes Blumenwasser ausreichend mit entsprechenden Schnittblumen-Behandlungsmitteln versehen ist.

Die EP-A 0 950 700 beschreibt die Verwendung von optischen Aufhellern in Flugzeugenteisungsmitteln zur Verbesserung des Nachweises der Anwendung von Enteisungsmitteln.

Es besteht nach wie vor ein Bedürfnis nach einem einfachen, preiswerten und schnell durchzuführenden Test, der Auskunft darüber gibt, ob Holz entsprechend behandelt ist oder nicht.

Die vorliegende Erfindung stellt nun ein detektierbares Mittel zur Holzbehandlung sowie ein Verfahren, mit dem die Anwesenheit des Mittels im Holz nachgewiesen werden kann, zur Verfügung. Das erfindungsgemäße Mittel enthält eine Konservierungsstoffsäure und eine UV-aktive Indikatorsubstanz.

Ein mit diesem Mittel behandeltes Holz kann nun mit einer einfachen UV-Lampe bestrahlt werden, wobei eine auftretende Fluoreszenz die Anwesenheit des Holzschutzmittels anzeigt.

Die vorliegende Erfindung setzt einen optischen Wandler ein, der eingestrahlte Ultraviolettstrahlung (180 - 400 nm) in längerwelliges Licht umwandelt und zu einer Fluoreszenzerscheinung führt. Damit sind sowohl alle Holzteile in sehr kurzer Durchlaufzeit auf Behandlung zu prüfen, und auch nachfolgende Wirtschaftszweige können die Behandlung prüfen. Dabei werden Mittel eingesetzt, die entweder beispielsweise in Lebensmitteln oder Bedarfsgegenständen bereits als Zusatzstoff eingesetzt werden oder in Produkten des täglichen Bedarfs eine sehr günstige toxikologische Bewertung erfahren haben (z. B.: GRAS "general recognised as safe" in den USA). Zweckmäßigerweise sollten die UV-aktiven Indikatorsubstanzen wasserlöslich sein, damit sie in wässriger Lösung gleichmäßig auf das zu behandelnde Holz, beispielsweise durch Beregnen, Sprühen, Tauchen oder Tränken, aufgebracht werden können.

Konservierungsstoffsäuren im Sinne der Erfindung sind insbesondere organische Konservierungsstoffsäuren, beispielsweise Ameisensäure, Essigsäure, Propionsäure, Milchsäure, Sorbinsäure, Benzoesäure und Mischungen derselben. Ebenso fallen unter diesen Begriff die Erdalkali- und Alkalimetallsalze dieser Säuren sowie Mischungen derselben. Weiterhin werden darunter auch Mischungen aus Säure(n) und Salz(en), auch verschiedener Säuren verstanden.

Als UV-aktive Indikatorsubstanzen im Sinne dieser Erfindung sind im Prinzip alle solche Verbindungen geeignet, die UV-Licht in sichtbares Licht wandeln. Viele dieser UV-aktiven Substanzen zeigen jedoch aufgrund ihrer chemischen Zusammensetzung ungewünschte Reaktionen mit hoch konzentrierten Säurelösungen bzw. Lösungen der Salze. In den Säurelösungen kommt es häufig zur hydrolytischen Spaltung der zugesetzten UV-aktiven Substanzen. In den Salzlösungen kommt es zu Ausflockungen, starken Verfärbungen oder gar zu Polymerisationsreaktionen nach längerer Lagerzeit (ca. 3 Monaten) im Tageslicht. Bevorzugte UV-aktive Indikatorsubstanzen sind deshalb solche, die die oben beschriebenen Reaktionen nicht zeigen. Zur Kombination mit den Konservierungsstofflösungen eignen sich besonders folgende wasserlöslichen UV-aktiven Indikatorsubstanzen allein oder in Mischungen: Derivate der Flavonsäure (4,4'-Diamino-2,2'-stilbendisulfonsäure), 4,4'-Distyryl-biphenylen, Methylumbelliferon, Cumarin, Dihydrochinolinon, 1,3-Diarylpyrazolin, Naphthalsäureimid, über CH=CH-Bindungen verknüpfte Benzoxazol-, Benzisoxazol- u. Benzimidazol-Systeme (wie beispielsweise 5,7-dimethyl-2-(4'-phenylstilben-4yl)benzoxazol oder Salze aus 2,5-Di(1-methylbenzimidazol-2yl)furan) und durch Heterocyclen substituierte Pyren-Derivate und Kombinationen der genannten UV-aktiven Indikatorsubstanzen. Besonders bevorzugt werden natürlich vorkommende Purinderivate wie Coffein, Theophyllin oder Xanthin sowie Kombinationen dieser Stoffe. Weiterhin sind bevorzugt gesundheitlich unbedenkliche Stoffe wie Riboflavin, Chinin, Chlorogensäure oder Chinolin gelb sowie Kombinationen dieser Verbindungen einzusetzen.

Die Kombination der Konservierungsstoffsäuren mit den oben bezeichneten, bevorzugten UV-aktiven Indikatorsubstanzen zeigen überraschenderweise keine nachteiligen Reaktionen, sondern sind vielmehr stabil, auch bei Raumtemperatur über einen Lagerzeitraum von 6 Monaten und gleichzeitiger Sonneneinstrahlung. Überraschenderweise tritt auch keine Fluoreszenzlöschung ein, sondern die UV-Aktivität ist nicht nur auf dem noch feuchten Holz, sondern auch noch nach dem Abtrocknen durch Bestrahlung von UV-Licht gut zu erkennen. Weiterhin zeigen die behandelten Hölzer nach dem Zusatz der UV-aktiven Indikatorsubstanzen überraschenderweise eine nochmals verlängerte Haltbarkeit gegenüber der Behandlung mit den reinen Konservierungsstoffsäurelösungen.

Die erfindungsgemäßen Mittel, enthaltend Konservierungsstoffsäure und UV-aktive Indikatorsubstanz, können auch zu einem Granulat oder Pulver sprühgetrocknet werden, welches dann in Wasser gelöst eingesetzt werden kann.

Werden diese Granulate in Wasser aufgelöst oder fertige Lösungen aus o.g. Stoffen als Mischung bereitgestellt, können zur besseren Handhabbarkeit und Mischbarkeit in einem kontinuierlichen Prozess, zu einem geringen Prozentsatz auch Verdickungsmittel zugesetzt werden, beispielsweise:
Mono- und Diglyceride von Speisefettsäuren, Stärke, AgarAgar, Alginate (z.B. Natrium oder Kaliumalginat), Carrageen, Guarkernmehl, Traganth, Xanthan, Cellulose und deren Derivate (z.B. Methylcellulose, Hydroxypropylcellulose, Carboxymethylcellulose (CMC)), Pektin, Gummi arabicum, Gelatine, Albumine, Caseinate, Polyole wie Hexylenglycol, Butylenglycol, Propylenglycol, Propan-1,2-diol, 2-Methyl-2,4-pentandiol, Heptandiol, Octandiol, Nonandiol, Decandiol.

Weiterhin können gegebenenfalls Schaumverhütungsmittel (Antischaummittel) zugesetzt werden, die eine eventuell auftretende Schaumbildung reduzieren. Antischaummittel können beispielsweise Polyethylen/-propylenglycolether, Alkylpolyethylenglycolether, langkettige Alkohole wie Isooctanol oder Mittel auf Siliconbasis (z. B. TEGO Antifoam® , Firma Goldschmidt-Degussa) sein.

Der Gehalt an Konservierungsstoffsäuren in der wässrigen Stammlösung liegt dabei zwischen 15,0 und 55,0 Gew.-%, bevorzugt zwischen 17,5 und 52,5 Gew.-%, besonders bevorzugt zwischen 20,0 und 50,0 Gew.-%. Der Gehalt an UV-aktiver Indikatorsubstanz in der wässrigen Stammlösung liegt zwischen 0,001 Gew.-% und 5 Gew. -%, bevorzugt zwischen 0,01 Gew.-% und 2,5 Gew.-%. Verdickungsmittel können der Stammlösung gegebenenfalls bis zu 10 Gew.-% zugesetzt werden. Antischaummittel werden gegebenenfalls in Konzentrationen bis zu 0,15% zugesetzt. Aus den so zusammengesetzten Stammlösungen können die o.g. sprühgetrockneten Pulver oder Granulate hergestellt werden. Zur Anwendung werden diese Lösungen mit Wasser in Verhältnissen > 1 (Vol.-Anteil Stammlösung) verdünnt.

Im Folgenden wird die Erfindung anhand von Beispielen näher erläutert.

### Beispiel 1

Eine 15 Gew.-%ige Natriumbenzoatlösung wird mit 0,20 Gew.-% Hostalux® N2R 200, flüssig (kationisches Pyrazolinderivat, Clariant, Muttenz, Schweiz) versetzt und die erhaltene Lösung mit 4 Vol.-Anteilen Wasser in einem Tauchbad gut durchmischt. Die so erhaltene Lösung wird zum Tauchen von frisch geschnittenen Brettern aus frisch geschlagenen Fichten eingesetzt.

### Beispiel 2

Einer 20 Gew.-%igen Calciumpropionatlösung werden 0,05 Gew.-% Leukophor® U flüssig (anionisches Stilbenderivat, Clariant, Muttenz, Schweiz) zugesetzt. Diese Lösung wird mit 4 Vol.-Teilen Wasser vermischt und mittels mobiler Spritzen auf frisch geschlagene, entrindete Kiefernstämme vor einer Lagerung oder dem Transport gesprüht.

### Beispiel 3

Einer 55 Gew.-%igen Kaliumsorbatlösung werden 0,15 Gew.-% Hostalux® N2R 200, flüssig (kationisches Pyrazolinderivat, Clariant, Muttenz, Schweiz) und 2,0 Gew.-% Coffein zugegeben und gut durchmischt. Diese Lösung wird in einem kontinuierlichen Prozess mit 9 Vol.-Anteilen Wasser verdünnt und sofort zur Beregnung von frisch geschnittenen Brettern aus frisch geschlagenen Kiefern eingesetzt.

### Beispiel 4

Einer 15 Gew.-%igen Natriumbenzoatlösung werden 0,25 Gew.-% Leukophor® U flüssig (anionisches Stilbenderivat, Clariant, Muttenz, Schweiz) zugemischt. Die so erhaltene Lösung wird mit 19 Vol.-Anteilen Wasser verdünnt und zur Beregnung von frisch geschnittenen Brettern aus frisch geschlagenen Kiefern eingesetzt.

### Beispiel 5

Einer 15 Gew.-%igen Natriumbenzoatlösung werden 0,175 Gew.-% Leukophor® U flüssig (anionisches Stilbenderivat, Clariant, Muttenz, Schweiz) zugesetzt und mit 1,0 Gew.-% Chininhydrochlorid-Dihydrat vermischt. Diese Suspension wird unter Rühren in einem Vorratstank mit 9 Vol.-Anteilen Wasser verdünnt und kontinuierlich auf frisch geschnittene Fichtenbretter gesprüht.

### Beispiel 6

In einer 50 Gew.-%igen Kaliumsorbatlösung werden 0,15 Gew.-% Hostalux® N2R 200, flüssig (kationisches Pyrazolinderivat, Clariant International Ltd.), 2 Gew.-% Coffein und 7,5 Gew.-% Propan-1,2-diol gemischt. Die Lösung wird kontinuierlich mit 19 Vol.-Anteilen Wasser vermischt und auf frisch gesägte Holzbretter versprüht.

### Beispiel 7

In einer 50 Gew.-%igen Kaliumsorbatlösung werden 0,15 Gew.-% Hostalux® N2R 200, flüssig (kationisches Pyrazolinderivat, Clariant International Ltd.), 2 Gew.-% Coffein und 7,5 Gew.-% 2-Methyl-2,4-pentandiol gemischt. Die Lösung wird kontinuierlich mit 19 Vol.-Anteilen Wasser vermischt und auf frisch gesägte Holzbretter versprüht.

### Beispiel 8

Einer 40 Gew.-%igen Kaliumsorbatlösung werden 0,25 Gew.-% Leukopho® U flüssig (anionisches Stilbenderivat, Clariant, Muttenz, Schweiz) gelöst und 2,0 Gew.-% Coffein und 2,5 Gew.-% Carboxymethylcellulose zugemischt. Diese Lösung wird kontinuierlich mit 19 Vol.-Anteilen Wasser verdünnt und für die Behandlung von frisch gesägten Holzbrettern eingesetzt.

### Beispiel 9

Einer 20 Gew.-%igen Calciumpropionatlösung werden 0,25 Gew.-% Hostalux® N2R 200, flüssig (kationisches Pyrazolinderivat, Clariant International Ltd.) zugegeben. Nach intensivem Rühren werden 5,0 Gew.-% Propan-1,2-diol zugemischt. Diese Lösung wird kontinuierlich mit 6 Vol.-Anteilen Wasser vermischt und konstant auf frisch gesägte Holzbretter versprüht.

### Beispiel 10

In einer 50 Gew.-%igen Kaliumsorbatlösung werden 0,15 Gew.-% Hostalux® N2R 200, flüssig (kationisches Pyrazolinderivat, Clariant International Ltd.), 2 Gew.-% Coffein und 7,5 Gew.-% 1,2-Propandiol gelöst. Diese Lösung wird in einem Vakuumbandtrockner getrocknet. Man erhält ein leicht bräunliches, schuppenartiges, grobes Pulver. Das Pulver kann direkt in der Lösung zur Holzbehandlung eingesetzt werden. Dazu werden 4,5 Gew.-% des Pulvers in Leitungswasser gelöst und frisch gesägte Holzbretter darin getaucht.

### Beispiel 11

In einer 45 Gew.-%igen Kaliumsorbatlösung werden 0,3 Gew.-% Leukophor® U flüssig (anionisches Stilbenderivat, Clariant, Muttenz, Schweiz) gelöst und 2 Gew.-% Coffein und 7,5 Gew.-% 2-Methyl-2,4-pentandiol dazu gemischt. Die so erhaltene Lösung wird schonend im Vakuum bei ca. 60 °C auf ca. 15-10 Gew.-% Trockenmasse eingedampft und anschließend sprühgetrocknet. Aus dem Pulver werden 5 Gew.-%ige Lösungen zur Beregnung von frisch gesägten Holzbrettern hergestellt.

### Beispiel 12

In einer 50 Gew.-%igen Kaliumsorbatlösung werden 0,25% Leukopho® flüssig (anionisches Stilbenderivat, Clariant, Muttenz, Schweiz) gelöst und 0,05 Gew.-% S 670® (Polymethyl/dimethylsiloxan, Wacker, München, Deutschland) zugesetzt. Diese Lösung wird kontinuierlich mit 19 Vol.-Anteilen Wasser verdünnt und für die Behandlung von frisch gesägten Holzbrettern eingesetzt.

### Beispiel 13

Einer 55 Gew.-%igen Kaliumsorbatlösung werden 0,175 Gew.-% Hostalux® N2R 200 flüssig (kationisches Pyrazolinderivat, Clariant, Muttenz, Schweiz) und 0,1 Gew.-% S 670® (Polymethyl/dimethylsiloxan, Wacker, München, Deutschland) zugegeben und gut durchmischt. Diese Lösung wird in einem kontinuierlichen Prozess mit 9 Vol.-Anteilen Wasser verdünnt und sofort zur Beregnung von frisch geschnittenen Brettern aus frisch geschlagenen Kiefern eingesetzt.

Werden die so behandelten Hölzer nach dem Abtrocknen der Behandlungslösung oder aber auch nach einem längerem Lagerzeitraum mit einer UV-Lampe, beispielsweise der Wellenlänge 366 nm bestrahlt, leuchten sie intensiv weiß-gelblich, weißviolett oder weiß-bräunlich, je nach Zusammensetzung der Behandlungslösung. Anhand dieser Leuchterscheinung können sowohl unbehandelte Stellen schnell nachgewiesen und ggf. nachbehandelt werden als auch die grundsätzliche Behandlung des gesamten Bretterstapels/Werkstückes nachgewiesen werden.

## Patentansprüche

1. Detektierbares Holzschutzmittel, enthaltend eine organische Konservierungsstoffsäure und/oder deren Salz oder Mischungen daraus sowie eine UV-aktive Indikatorsubstanz.

2. Mittel nach Anspruch 1, **dadurch gekennzeichnet, dass** die organische Konservierungsstoffsäure Ameisensäure, Essigsäure, Propionsäure, Milchsäure, Sorbinsäure oder Benzoesäure ist.

3. Mittel nach Anspruch 1 oder 2, **dadurch gekennzeichnet, dass** das Salz ein Alkali- oder Erdalkalisalz ist.

4. Mittel nach einem der Ansprüche 1 bis 3, **dadurch gekennzeichnet, dass** die UV-aktive Indikatorsubstanz ausgewählt ist aus: Derivaten von 4,4'-Distyryl-biphenylen, Stilbenen, Flavonsäure, Pyrazolinen, Umbelliferon, Cumarin, Dihydrochinolinon, Naphthalsäureimiden, Benzoxazol-, Benzisoxazol- und Benzimidazol-Systemen, Purinderivate und durch Heterocyclen substituierten Pyren-Derivaten, Riboflavin, Chinin, Chlorogensäure, Chinolin gelb und Kombinationen daraus.

5. Mittel nach Anspruch 4, **dadurch gekennzeichnet, dass** die UV-aktive Indikatorsubstanz wasserlöslich ist.

6. Mittel nach einem der Ansprüche 1 bis 5, **dadurch gekennzeichnet, dass** es ein Verdickungsmittel enthält, welches ausgewählt ist aus: Mono- und Diglyceriden von Speisefettsäuren, Stärke, AgarAgar, Alginaten, Carrageen, Guarkernmehl, Traganth, Xanthan, Cellulose und deren Derivate, Pektin, Gummi arabicum, Gelatine, Albuminen, Caseinaten und Polyolen.

7. Mittel nach einem der Ansprüche 1 bis 6, **dadurch gekennzeichnet, dass** es ein Antischaummittel enthält, welches ausgewählt ist aus: Polyethylen/-propylenglycolether, Alkylpolyethylenglycolether, langkettigen Alkoholen, Polymethyl/dimethylsiloxanen oder anderen Antischäumungsmitteln auf Silicon-Basis.

8. Mittel nach einem der Ansprüche 1 bis 6, **dadurch gekennzeichnet, dass** es Wasser enthält.

9. Holz, **gekennzeichnet durch** einen Gehalt an einem Mittel gemäß einem der Ansprüche 1 bis 8.

10. Verfahren zur Herstellung eines Mittels nach Anspruch 1, **dadurch gekennzeichnet, dass** man eine organische Konservierungsstoffsäure und eine UV-aktive Indikatorsubstanz miteinander mischt.

11. Verfahren zur Detektion von konserviertem Holz, **dadurch gekennzeichnet, dass** man dem Konservierungsmittel für das Holz eine UV-aktive Indikatorsubstanz beimischt, das Holz mit dieser Mischung konserviert und das Vorhandensein der UV-aktiven Indikatorsubstanz mit einer UV-Strahlungsquelle nachweist.

12. Verwendung einer UV-aktiven Indikatorsubstanz zur Herstellung eines detektierbaren Holzschutzmittels.
